# EUROPEAN PATENT APPLICATION

(11) **EP 1 471 487 A1**
(43) Date of publication of application: **27.10.2004**
(21) Application number: 03290805.5
(22) Date of filing: 31.03.2003
(51) Int. Cl.: G09F 9/37, G02B 26/02

(54) **A display device comprising an array of bichromal particles**

(71) Applicant: Thomson Licensing S.A., 92100 Boulogne Cedex (FR)
(72) Inventor: Chikazawa, Yoshiharu, Yokohama, 221 (JP)
(74) Representative: Kerber, Thierry

(57) **Abstract**

The invention relates to a display device comprising an array of balls or particles having two sides or parts of different colours, and means for controlling the side or part of each ball or particle to be displayed.

The balls or particles are arranged in a plurality of pixels (40), each pixel (40) comprising at least three balls or particles (B&R,B&G,B&B) and in each pixel, one side or part of each ball or particle has a same colour and the other side or part of each ball or particle has a colour which is different from the colours of the other balls or particles.

In an embodiment, in each pixel (40), the side or part which has the same colour for all the balls or particles is black, white or grey.

## Description

The invention relates to a display comprising particles, such as balls, exhibiting two parts which are visually different, and control means for providing an orientation of the particles such that a requested text or image is displayed on a screen.

This kind of display device is used in applications where a minimum of energy is required for a display. In fact, when the particles or balls have been oriented correctly, it is no more necessary to provide energy for the display. A typical example is an electronic book.

The orientation of the particles may be controlled either with a voltage, for instance in an electrophoretic display, or with a magnetic field.

This display is in practice used only for black and white displays but not for colours. However, it has already been proposed to provide a colour display of this type. In a prior art description of such colour display, the particles or balls, have several colour parts and the colour of each particle is obtained through the control of the rotation angle of each ball, so that the desired colour is exhibited. However, this technology is complex and cannot be implemented with simple control means of the matrix type.

A simpler colour display has also been proposed wherein the particles are black and white and the colours are obtained by using colour filters. The drawback of such display is that it presents a low contrast.

One goal of this invention is to provide a simple matrix display device providing colour displays with good contrast.

The display device according to the invention comprises pixels wherein each pixel includes at least three particles or balls wherein each particle or ball of the pixel has one part which is black or white or grey and another part which has a given colour, different from the colours of the two other particles of the same pixel. The colours in one pixel are, for instance, red, green and blue.

In an embodiment, each pixel has four particles or balls.

When each pixel has three particles or balls, it is possible to display eight colours. With four particles or balls, it is possible to display sixteen colours.

In an embodiment, the three or four particles or balls of one pixel are arranged according to a straight line. Such straight line may be in a horizontal, a vertical or in an oblique direction.

In another embodiment, the particles or balls of each pixel form a triangle or a parallelogram, for instance a lozenge.

It is also possible to have a pixel arrangement wherein the particles are according two lines, for instance one horizontal line and one oblique line.

The invention concerns, in brief, a display device comprising an array of balls or particles having two sides or parts of different colours, and means for controlling the side or part of each ball or particle to be displayed,
wherein the balls or particles are arranged in a plurality of pixels, each pixel comprising at least three balls or particles,
and in each pixel, one side or part of each ball or particle has a same colour and the other side or part of each ball or particle has a colour which is different from the colours of the other balls or particles.

In an embodiment, in each pixel the side or part which has the same colour for all the balls or particles is black, white or grey.

Each pixel may have at least three balls or particles, the first one having a red side or part, the second one a green side or part and the third one a blue side or part.

In an embodiment, the arrangement of balls or particles is the same on all the lines. The arrangement of balls or particles may be such that the projection of the position of one ball or particle on the adjacent line is between two balls or particles on this adjacent line.

In another embodiment, the arrangement of balls or particles is the same on all the columns.

The balls or particles of each pixel may be aligned. In that case, the direction of each pixel may be selected in the group comprising: a line direction, a column direction and an oblique direction.

In an embodiment, the balls or particles of each pixel are such that in each pixel the balls or particles are arranged according to a triangle or a parallelogram.

Each pixel may comprise three balls or particles on different lines (or columns) and a fourth ball or particle on the same line (or column) as one other ball or particle of this same pixel.

In an embodiment, the display device comprises means to provide an orientation of each ball or particle such that this ball or particle displays a fraction of one side or part and a fraction of the other side or part in order to display a plurality of grey levels and/or colours.

The display device may be such that each pixel has at least four balls or particles, with one of these balls or particles having a black side or part and a white side or part.

The balls or particles may be magnetic.

In another embodiment, the orientation of each ball or particle is controlled by electrophoretic means.

Other features and advantages of the invention will appear with the description of certain of its embodiments, this description being made in connection with the drawings wherein:
figure 1a and figure 1b represent the principles of an electrophoretic display,
figure 2 represents schematically a magnetic ball display,
figure 3(a) to figure 3(f) represent a first type of pixel arrangements according to the invention, and
figure 4(a) to figure 4(f) represent another type of pixel arrangement according to the invention.

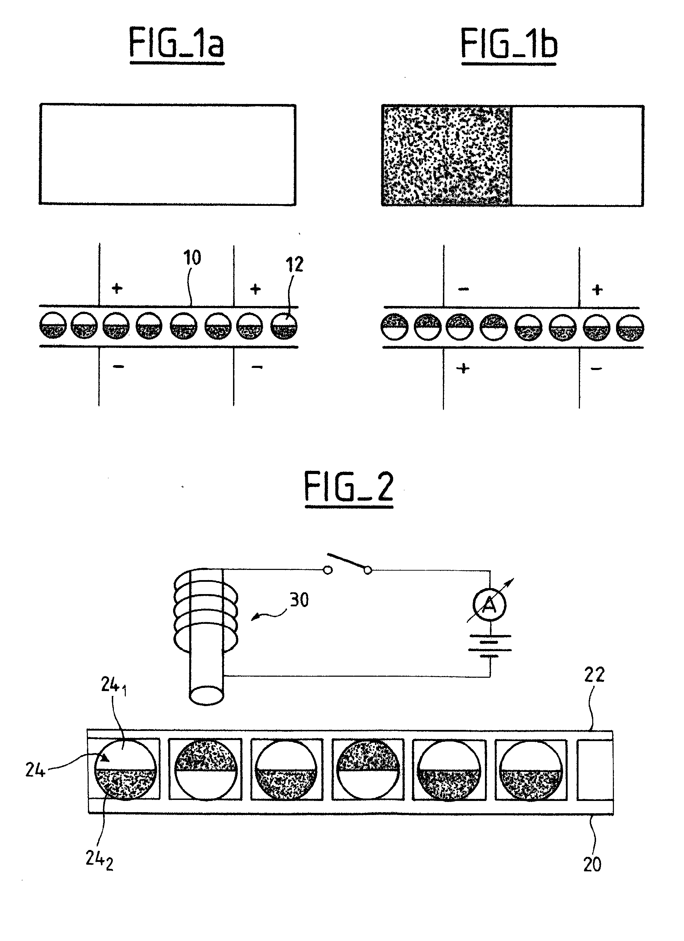

Figure 1a and figure 1b represent the principle of operation of an electrophoretic display:

An electrophoretic display comprises particles or balls, each one having two parts, for instance as known in the prior art, one black part and one white part. The particles are such that if a plus voltage is applied on the front screen 10, the particles 12 present their white part and if a negative voltage is applied on the front screen, the particles present their white part.

For instance, on figure 1a, the screen appears white and on figure 1b, half of the screen is black and half of the screen is white.

The voltages are applied through a matrix of conductors and corresponding control means.

According to the invention, as described herein after, each pixel has at least three particles or balls and each of these particles or balls has a white (or black, or grey) part and another part which has a given colour. The colours of the second parts of the particles or balls of the same pixel are different from each other.

On figure 2 is represented a magnetic ball display comprising an iron plate 20 and a transparent cover 22. The iron plate and the transparent cover are, respectively, the back and front faces of the display housing. This housing is filled with oil and comprises a plurality of micro housings inside each of which is lodged a magnetic ball 24. Each magnetic particle or ball 24 has two parts: a first one 24₁ which (in this example) is white and another part 24₂ which has a given colour according to the invention. The side 24₁ has a given magnetic polarity, for instance north, and the other side 24₂ has the other magnetic polarity.

In this embodiment, where every ball is enclosed in a micro housing, the lateral walls of these micro housings are, for instance, made of acrylic material.

In order to display information, each magnetic ball must be correctly oriented. To this effect, a matrix of actuators 30 is provided in order to provide to each particle or ball the correct orientation towards the transparent cover 22, i.e. either the white face 24₁ or the coloured face 24₂.

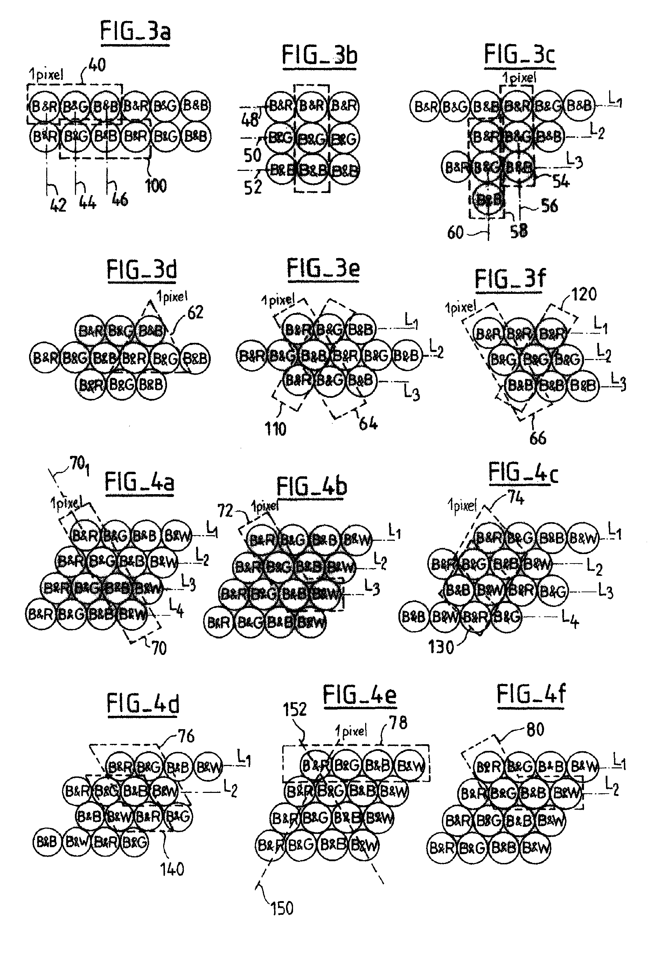

Figures 3(a) to 3(f) represent several arrangements wherein each pixel comprises three balls or particles. These arrangements may be used either for an electrophoretic display or for a magnetic display or, more generally, for any kind of display with orientable particles or balls.

On these figures, each ball is represented by a circle inside of which two block letters are mentioned which have the following meaning:
B&R means a ball or particle with a black (B) face and a red (R) face.
B&G means black and green (G)
B&B means black and blue (B). It is to be noted here that the first B means always black and the second B means always blue.

It is also to be noted that in the previous description, as well as in the following description, if "particle" or "ball" is mentioned alone, it must be understood as meaning particle or ball.

In the embodiment represented on figure 3(a), each pixel 40 has three particles B&R, B&G and B&B which are aligned. Each line of the display has such succession of pixels and on all the lines, all the pixels and pixel elements have the same position. Therefore, the display has a succession of vertical monochrome columns B&R (column 42), B&G (column 44) and B&B (column 46).

In the embodiment shown on figure 3(b), the pixels are according to a vertical line, i.e. the succession of B&R, B&G and B&B pixel elements, form columns. Therefore, the lines are monochrome. As represented line 48 is B&R, line 50 is B&G and line 52 is B&B.

In the embodiment of figure 3(c), the pixels are also according to columns. However, neighbour pixels in neighbour columns have positions which are shifted. As shown, pixel 54 of column 56 has a neighbour pixel 58 on column 60 such that the corresponding elements of pixel 60 are shifted of one line with respect to the pixel elements of pixel 56. More precisely, the B&R element of pixel 56 is on line L₁ and the B&R element of pixel 60 is on line L2, etc.

It results from this configuration that the monochrome lines are oblique.

In the embodiment represented on figure 3(d), the three elements of each pixel are installed at the apexes of a triangle. In order to obtain this result, the pixel elements from adjacent lines are such that one given element (for instance, B&R) on a given line has a position which is between two different pixel elements (B&G and B&B) on the adjacent line. Similarly, the projection on the adjacent line of B&G (or B&B) pixel element is between the positions of a B&B and a B&R pixel element (or between B&R and B&G for element B&B).

In the embodiment represented on figure 3(e), a pixel 64 comprises three elements according to an oblique line, the elements of each pixel being included in three different lines of the display. More precisely, the B&R elements of pixel 64 is on line L₁, the B&B element of pixel 64 is on line L2 and the B&G element of pixel 64 is on line L3. As on figure 3(d), the projection on line L₂ of B&R of line L₁ is between the elements B&G and B&B. The arrangement of lines is like on figure 3(d), i.e. each line has a succession of B&R, B&G and B&B elements.

In the embodiment represented on figure 3(f), the pixels are also according to an oblique direction. However, the lines are monochrome. In this example, line L₁ has only B&R elements, line L₂ has only B&G elements and line L₃ has only B&B elements. The projection of each element of a given line is between two elements of the adjacent line. For instance, the B&R element of line L₁ has its projection between two B&G elements of line L2.

Each pixel may have one colour selected among 8 colours. The 8 colours are: black, white (R+G+B), R, G, B, R+G, R+B and G+B.

In another embodiment, instead of one side of each pixel element being black or grey, this side is white.

In the embodiment represented on figures 4(a) to 4(f), each pixel has four pixel elements which are B&R (black and red), B&G (black and green), B&B (black and blue) and B&W (black and white). Therefore, it is possible to have a display with a colour selected among 2⁴=16 colours.

In the example represented on figure 4(a), the pixel 70 has an oblique direction 70₁. B&R is on line L₁, B&G is on line L₂, B&B is on line L₃ and B&W is on line L₄. Each line has a succession of B&R, B&G, B&B and B&W elements. The arrangement is such that the projection on line L₂ of B&R of line L₁ is between B&R and B&G of line L₂.

The global arrangement of pixel elements represented on figure 4(b) is the same as the one represented on figure 4(a). However, a pixel 72 has the pixel element B&R on line L₁, the pixel element B&G on line L₂, the pixel B&B on line L₃ and the pixel element B&W on line L₃ also. In other words, the pixel 72 is arranged according to two segments, one which is along a line of the display and the other with an oblique direction (B&R, B&G and B&B).

In this embodiment, the display has two directions of higher resolutions which are, on the one hand, according to the lines and, on the other hand, according to the direction perpendicular to the oblique direction 72₁. In the embodiment represented on figure 4(a), the higher resolution is on the line perpendicular to the oblique direction 70₁ of the pixels.

In the embodiment represented on figure 4(c), on each line, the succession of pixel element is B&R, B&G, B&B and B&W. From one line to the next, the pixel elements are shifted of one and a half positions towards the left. This means that the projection, on line L₂, of B&R of line L₁ is between B&G and B&B of line L₂.

The pixel 74 comprises the B&R element on line L₁, B&G and B&B elements on line L₂ and B&W element on line L₃. In that case, the resolution is practically isotropic.

The arrangement of pixel elements represented on figure 4(d) is the same as the one represented on figure 4(c). However, each pixel 76 is only on two lines. In this example, pixel 76 comprises pixel elements B&R and B&G on line L₁ and B&B and B&W on line L₂.

This embodiment of figure 4(d) has an isotropic resolution like on figure 4(c).

In the embodiment represented on figure 4(e), the arrangement of the pixel elements is like on figure 4(a). However, each pixel 78 comprises pixel elements on the same line. In that case, the higher resolution is in the vertical direction.

In the embodiment represented on figure 4(f), the arrangement of pixel elements is like on figures 4(a) and 4(e). However, each pixel 80 is on two lines with B&R on line L₁ and the three other elements on line L₂: B&G, B&B and B&W.

In the embodiments which have been described up to now, it is necessary to control the rotation of each ball or particle according to two axes in order that each ball or particle presents only one side.

In another embodiment, the number of intensities and the number of colours are increased by selection of the rotation angle of each ball or particle. In that case, the rotation of the ball or particle may be controlled according to only one axis.

Of course, the invention is not limited to the arrangement of pixel elements as represented on figure 3 and figure 4. This is true not only for the order of successions of pixel elements but also for the directions of the pixels.

For instance, with the same global arrangement of pixel elements, in figure 3(a), instead of having always the succession B&R, B&G, B&B, it is possible to realize this succession on a first line and to realize the succession 100: B&G, B&B and B&R on the next line.

Similarly, on figure 3(b), on a first column, the pixels have the succession B&R, B&G and B&B and on the next column, the pixel may begin with the B&G element and in the second next column, the pixel may begin with B&B.

On figure 3(c), it is possible to arrange the pixels in such a way that all pixels have their first element on the same line. For instance, the pixel for the column on the right of pixel 54 would be B&G, B&B and B&R.

On figure 3(d), the triangle pixel could use the same line for B&R and B&G but for B&B, the next line instead of the previous line (compared to the one where B&R and B&G are located).

On figure 3(e), a pixel 110 can be selected instead of pixel 64.

On figure 3(f), pixel 120 can be used instead of pixel 66.

On figure 4(a), the arrangement of pixel elements can be such that each pixel has an oblique direction which is symmetrical to the direction 70₁ with respect to a vertical direction.

On figure 4(c), with the arrangement of pixel elements, it is possible to select the lozenge pixel 30 instead of pixel 74.

On figure 4(d), the pixel 140 can be selected instead of pixel 76.

On figure 4(e), the arrangement of pixel elements can be modified in such a way that the monochrome alignments, according to the oblique lines 150, have the oblique direction 152, which is symmetrical with respect to a vertical axis.

The display of this invention may be used for any kind of application. It can be used not only for public displays such as advertisements, information on the road, etc. but also for small size displays such as electronic books, mobile terminals, watches, etc. This display has a very low consumption of energy.

## Claims

1. A display device comprising an array of balls or particles having two sides or parts of different colours, and means for controlling the side or part of each ball or particle to be displayed,
wherein the balls or particles are arranged in a plurality of pixels, each pixel comprising at least three balls or particles (B&R, B&G, B&B; B&R, B&G, B&B, B&W),
and in each pixel, one side or part of each ball or particle has a same colour and the other side or part of each ball or particle has a colour which is different from the colours of the other balls or particles.

2. A display device according to claim 1 wherein in each pixel the side or part which has the same colour for all the balls or particles is black, white or grey.

3. A display device according to claim 1 or 2 wherein each pixel has at least three balls or particles, the first one having a red side or part, the second one a green side or part and the third one a blue side or part.

4. A display device according to any of the claims 1 to 3 wherein the arrangement of balls or particles is the same on all the lines.

5. A display device according to any of the claims 1 to 3 wherein the arrangement of balls or particles is the same on all the columns.

6. A display device according to claim 4 wherein the arrangement of balls or particles is such that the projection of the position of one ball or particle on the adjacent line is between two balls or particles on this adjacent line.

7. A display device according to any of the previous claims wherein the balls or particles of each pixel are aligned.

8. A display device according to claim 7 wherein the direction of each pixel is selected in the group comprising: a line direction, a column direction and an oblique direction.

9. A display device according to any of the previous claims wherein the balls or particles of each pixel are such that in each pixel the balls or particles are arranged according to a triangle or a parallelogram.

10. A display device according to claim 1 wherein each pixel has three balls or particles on different lines (or columns) and a fourth ball or particle on the same line (or column) as one other ball or particle of this same pixel.

11. A display device according to any of the previous claims comprising means to provide an orientation of each ball or particle such that this ball or particle displays a fraction of one side or part and a fraction of the other side or part in order to display a plurality of grey levels and/or colours.

12. A display device according to any of the previous claims wherein each pixel has at least four balls or particles, with one of these balls or particles having a black side or part and a white side or part.

13. A display device according to any of the previous claims wherein the balls or particles are magnetic.

14. A display device according to any of claims 1-12 wherein the orientation of each ball or particle is controlled by electrophoretic means.
